# EUROPÄISCHE PATENTSCHRIFT

(11) **EP 2 633 604 B1**
(45) Veröffentlichungstag und Bekanntmachung des Hinweises auf die Patenterteilung: **19.04.2017**
(21) Anmeldenummer: 11764103.5
(22) Anmeldetag: 19.09.2011
(51) Int. Cl.: H02K 7/102

(54) **BAUSATZ ZUR HERSTELLUNG UNTERSCHIEDLICHER ELEKTROMOTOREN EINER BAUREIHE VON ELEKTROMOTOREN UND VERFAHREN ZUR HERSTELLUNG**
KIT FOR THE PRODUCTION OF DIFFERENT ELECTRIC MOTORS OF A GROUP OF ELECTRIC MOTORS AND METHOD OF PRODUCTION
ENSEMBLE POUR LA FABRICATION DE MOTEURS ÉLECTRIQUES DIFFÉRENTS D'UNE SÉRIE DE MOTEURS ÉLECTRIQUES ET PROCÉDÉ DE FABRICATION

(30) Priorität: 29.10.2010 DE 102010049747
(43) Veröffentlichungstag der Anmeldung: 04.09.2013
(73) Patentinhaber: Sew-Eurodrive GmbH & Co. KG, 76646 Bruchsal (DE)
(72) Erfinder: LUTZ, Andreas, 76287 Rheinstetten (DE); FLÖRCHINGER, Gerhard, 67376 Harthausen (DE)
(86) Internationale Anmeldenummer: PCT/EP2011/004679
(87) Internationale Veröffentlichungsnummer: WO 2012/055463

(56) Entgegenhaltungen:
- DE-A1- 19 838 171
- DE-A1-102004 033 745
- DE-A1-102009 005 885
- GB-A- 779 349
- US-A- 3 338 349

## Beschreibung

Die Erfindung betrifft einen Bausatz zur Herstellung unterschiedlicher Elektromotoren einer Baureihe von Elektromotoren und ein Verfahren zur Herstellung.

Aus der DE 10 2004 033745 A1 ist ein Elektromotor mit Lüfter und Bremse bekannt.

Aus der US 3 338 349 A ist ein Elektromotor mit anmontierter Bremse bekannt.

Aus der DE 198 38 171 A1 ist ein Elektromotor mit vorkomplettierter Bremse bekannt.

Aus der GB 779 349 A ist eine elektromagnetisch betätigbare Reibungsbremse bekannt.

Der Erfindung liegt daher die Aufgabe zugrunde, die Herstellung von Motoren kostengünstig weiterzubilden, insbesondere unter Erhöhung der Sicherheit.

Erfindungsgemäß wird die Aufgabe bei dem Bausatz nach den in Anspruch 1 und bei dem Verfahren nach den in Anspruch 12 angegebenen Merkmalen gelöst.

Wichtige Merkmale bei dem Bausatz zur Herstellung unterschiedlicher Elektromotoren einer Baureihe von Elektromotoren sind, dass der Bausatz zumindest
- eine erste Bremse,
- ein erstes und ein zweites Lagerschild,
- ein erstes und ein zweites Gehäuseteil,
- erste und zweite Anbaueinheit,
aufweist,
wobei das erste Gehäuseteil mit dem ersten Lagerschild verbindbar ist, insbesondere schraubverbindbar ist, so dass ein Gehäuse gebildet ist für einen ersten Motor,
wobei das zweite Gehäuseteil mit dem zweiten Lagerschild verbindbar ist, insbesondere schraubverbindbar ist, so dass ein Gehäuse gebildet ist für einen zweiten Motor,
wobei die erste Bremse wahlweise im ersten oder zweiten Lagerschild aufnehmbar ist, so dass das jeweilige Lagerschild die erste Bremse gehäusebildend umgibt und die Rotorwelle des Motors in einem vom Lagerschild aufgenommenen Lager lagerbar ist,
wobei das Gehäuse die Statorwicklungen des jeweiligen Motors gehäusebildend umgibt und aus Gehäuseteilen zusammengesetzt ist, insbesondere mittels jeweiliger abgedichteter Schraubverbindungen zwischen dem jeweiligen Lagerschild und dem jeweiligen Gehäuseteil.

Von Vorteil ist dabei, dass mit einer geringen Teilezahl eine hohe Varianz an Motoren herstellbar ist. Beispielswiese ist ein erster Motor ein Asynchronmotor und ein zweiter Motor ein Synchronmotor. Im jeweiligen B-seitigen Lagerschild ist dann die erste Bremse einbaubar, so dass die selbe erste Bremse bei unterschiedlichen Motoren aufnehmbar ist. Auf diese Weise ist nur eine erste Bremse im Lager für die Fertigung der Motoren zu bevorraten. Die erste Bremse ist durch ihre vorkomplettierte Ausführung funktionsüberprüfbar und zwar schon vor dem Einbau in den jeweiligen Motor. Nach der Erfindung umfasst die erste oder zweite Anbaueinheit zumindest eine zweite Bremse, wobei die zweite Bremse am Gehäuse des Motors anbaubar ist. Von Vorteil ist dabei, dass B-seitig am Lagerschild weitere Anbaueinheiten vorsehbar sind, die wiederum unterschiedliche Funktionalitäten aufweisen können. Nach der Erfindung ist die zweite Bremse am ersten oder zweiten Lagerschild anbaubar. Von Vorteil ist dabei, dass das Lagerschild auch als Bremsfläche für die zweite Bremse dienen kann oder zumindest die Wärme eines Reibschildes der zweiten Bremse an die Umgebung abführt. Somit ist ein besonders kompakter Aufbau und die Erreichung einer erhöhten Sicherheit gewährleistet.
Bei einer vorteilhaften Ausgestaltung ist die erste Bremse im Gehäuse des ersten oder zweiten Motors anordenbar. Von Vorteil ist dabei, dass der jeweilige Motor eine Einbaubremse aufweist und somit als Bremsmotor ausgeführt ist, wobei die erste Bremse baugleich und somit mehrfach in der Baureihe verwendet ist.
Bei einer vorteilhaften Ausgestaltung unterscheidet sich der erste Motor vom zweiten Motor, insbesondere indem der erste Motor ein Asynchronmotor und der zweite Motor ein Synchronmotor ist. Von Vorteil ist dabei, dass die Baureihe unterschiedliche Motorarten umfasst und trotz der unterschiedlichen Drehmomente gleichartige Bremsen verwendbar sind.

Bei der Erfindung ist erste und zweite Bremse vorkomplettiert ausgebildet, insbesondere also die Bremsen vor dem Zusammenbauen des gesamten Motors mit Bremsen funktionsüberprüfbar sind. Von Vorteil ist dabei, dass die Qualität verbessert ist, indem die Funktion überprüft ist.
Bei einer vorteilhaften Ausgestaltung ist die erste Bremse in einer im Wesentlichen topfförmigen Vertiefung des jeweiligen Lagerschildes aufnehmbar und schraubverbindbar, insbesondere wobei das jeweilige Lagerschild als Bremsfläche für einen Belagträger der zweiten Bremse fungiert, wobei der Belagträger von einer mittels Federelementen axial verschiebbaren Ankerscheibe beaufschlagt wird. Von Vorteil ist dabei, dass die erste Bremse geschützt ist im Lagerschild.
Bei einer vorteilhaften Ausgestaltung fungiert das erste oder zweite Lagerschild als Spulenkern der Spulenwicklung des Elektromagneten der ersten Bremse, wobei die erste Bremse als elektromagnetisch betätigbare Federdruckbremse ausgeführt ist. Von Vorteil ist dabei, dass eine nur geringe Anzahl von Teilen notwendig ist zur Herstellung der Motorenbaureihe.

Bei einer vorteilhaften Ausgestaltung nimmt das erste und zweite Gehäuseteil ein Lager der Rotorwelle des Motors auf, insbesondere wobei das erste und zweite Gehäuseteil zweistückig ausgeführt sind und hierzu zumindest ein weiteres Lagerschild umfassen, welches das Lager der Rotorwelle des Motors aufnimmt. Von Vorteil ist dabei, dass eine einfache Herstellung ermöglicht ist.

Bei einer vorteilhaften Ausgestaltung ist beziehungsweise sind eine der Bremsen oder beide Bremsen als elektromagnetisch betätigbare Federdruckbremse ausgeführt, insbesondere wobei am Spulenkörper des Elektromagneten Federelemente abgestützt sind, die bei Nichtbestromung des Elektromagneten eine Ankerscheibe auf einen Belagträger drücken, der somit auf eine Reibscheibe gedrückt wird, wobei die Ankerscheibe drehfest zur Reibscheibe und zum Elektromagneten angeordnet ist und axial verschiebbar angeordnet ist, wobei der Belagträger mit der Rotorwelle des Elektromotors drehfest und axial verschiebbar verbunden ist. Von Vorteil ist dabei, dass bei Stromausfall die Bremse einfällt und somit die Sicherheit erhöht ist.

Bei einer vorteilhaften Ausgestaltung ist eine Bremse, insbesondere die erste und zweite Bremse, vorkomplettiert ausgebildet, insbesondere indem eine Reibscheibe mittels eines Führungsteils axial beabstandet zu einem Spulenkern der Bremse und festgelegt ist,
insbesondere wobei das Führungsteil zur axialen Führung einer Ankerscheibe der Bremse vorgesehen ist, wobei die Ankerscheibe in Umfangsrichtung formschlüssig begrenzt und/oder gehalten ist vom Führungsteil. Von Vorteil ist dabei, dass zur Vorkomplettierung nur ein einfach herstellbares Führungsteil notwendig ist.

Bei einer vorteilhaften Ausgestaltung weist das Führungsteil einen ersten axialen Abschnitt auf zur Führung der Ankerscheibe und einen zweiten axialen Abschnitt auf, der ein Außengewinde zum Einschrauben in eine Gewindebohrung des Spulenkerns aufweist. Von Vorteil ist dabei, dass das Zusammenhalten der Bremse in einfacher Weise ausführbar ist.

Bei einer vorteilhaften Ausgestaltung ist an einem axialen Endbereich des Führungsteils ein Innensechskant vorgesehen, insbesondere so dass das Führungsteil mittels eines Sechskant-Werkzeugs in eine Gewindebohrung des Spulenkerns einschraubbar ist. Von Vorteil ist dabei, dass ein einfaches Schraubverbinden des Führungsteils in den Spulenkern ermöglicht ist.

Bei einer vorteilhaften Ausgestaltung weist das Führungsteil eine Ausnehmung mit Innengewinde auf, so dass eine Reibscheibe der Bremse mittels einer Schraube an das Führungsteil schraubverbindbar ist, insbesondere gegen einen Absatz am Außenumfang des Führungsteils festlegbar ist. Von Vorteil ist dabei, dass ein Abstand vorgebbar und einhaltbar ist.

Bei einer vorteilhaften Ausgestaltung ist zwischen einem Raumbereich, der die erste Bremse umfasst, und einem Raumbereich, der den Stator umfasst, eine Dichtscheibe angeordnet, insbesondere weist die zur Rotorwelle hin eine Abdichtung, wie Labyrinth-Dichtung, auf. Von Vorteil ist dabei, dass Abrieb der Bremse nicht in den Motorbereich gelangen kann.

Wichtige Merkmale bei dem Verfahren zum Herstellen unterschiedlicher Elektromotoren aus einem Bausatz sind, dass der Bausatz zumindest
- eine erste Bremse,
- ein erstes und ein zweites Lagerschild,
- ein erstes und ein zweites Gehäuseteil,
- erste und zweite Anbaueinheit,
aufweist,
wobei wahlweise
- zur Bildung eines ersten Elektromotors das erste Gehäuseteil mit dem ersten Lagerschild verbunden wird, insbesondere schraubverbunden wird, so dass ein Gehäuse gebildet ist für den ersten Motor, wobei die erste Bremse im ersten Lagerschild aufgenommen wird, so dass das erste Lagerschild die erste Bremse gehäusebildend umgibt und die Rotorwelle des Motors in einem vom ersten Lagerschild aufgenommenen Lager lagerbar ist,
   oder
- zur Bildung eines zweiten Elektromotors das zweite Gehäuseteil mit dem zweiten Lagerschild verbunden wird, insbesondere schraubverbunden wird, so dass ein Gehäuse gebildet ist für den zweiten Motor, wobei die erste Bremse im zweiten Lagerschild aufgenommen wird, so dass das zweite Lagerschild die erste Bremse gehäusebildend umgibt und die Rotorwelle des Motors in einem vom zweiten Lagerschild aufgenommenen Lager lagerbar ist,
wobei das jeweils gebildete Gehäuse die Statorwicklungen des jeweiligen Motors gehäusebildend umgibt und aus Gehäuseteilen zusammengesetzt wird, insbesondere mittels jeweiliger abgedichteter Schraubverbindungen zwischen dem jeweiligen Lagerschild und dem jeweiligen Gehäuseteil,

Von Vorteil ist dabei, dass eine hohe Varianz in der Baureihe durch eine geringe Anzahl von Teilen erreichbar, die Sicherheit erhöht und die Fertigung einfach ist.

Bei einer vorteilhaften Ausgestaltung wird am ersten Lageschild eine erste Anbaueinheit verbunden, insbesondere schraubverbunden wird und am zweiten Lageschild eine zweite Anbaueinheit verbunden wird, insbesondere schraubverbunden wird. Von Vorteil ist dabei, dass das Lagerschild nicht nur zur Aufnahme der ersten Bremse und Abführung der von der ersten Bremse erzeugten Wärme an die Umgebung dient sondern auch zum Halten einer Anbaueinheit. Auf diese Weise sind verschiedene Anbaueinheiten und somit auch Funktionalitäten durch das Lagerschild ausführbar und daher mit wenigen Bauteilen eine hohe Varianz von Motoren innerhalb der Baureihe erreichbar.

Bei einer vorteilhaften Ausgestaltung umfasst die erste und/oder zweite Anbaueinheit zumindest eine zweite Bremse, wobei die zweite Bremse am ersten beziehungsweise zweiten Lagerschild angebaut wird, insbesondere wobei erste und zweite Anbaueinheit unterschiedlich sind. Von Vorteil ist dabei, dass die Sicherheit erhöhbar ist, da durch die zweite Bremse eine redundante Bremsfunktion erzeugbar ist.

Wichtig ist bei der Bremse, insbesondere vorkomplettiert ausgebildete Bremse, für einen Elektromotor, in dessen Gehäuse die Bremse anordenbar ist, dass
die Bremse elektromagnetisch betätigbar ist und
- eine Spulenwicklung aufweist, die in einem Spulenkern vorgesehen ist,
- einen Belagträger aufweist, der mittels einer auf einer Rotorwelle des Elektromotors vorsehbaren Mitnehmerverzahnung in Umfangsrichtung formschlüssig und linear, insbesondere in Rotorachsrichtung, bewegbar anordenbar ist, insbesondere auf einer Rotorwelle des Elektromotors,
- eine von zumindest einem Führungsteil in Achsrichtung geführte Ankerscheibe, insbesondere eine von Federelementen beaufschlagbare Ankerscheibe, und
- eine Reibscheibe,
umfasst,
wobei das Führungsteil mit dem Spulenkern und mit der Reibscheibe lösbar verbunden ist, insbesondere schraubverbunden ist, und die Reibscheibe mittels des Führungsteils beabstandet ist, insbesondere also auf einen vorgebbaren festen Abstand zum Spulenkern festgelegt ist.

Von Vorteil ist dabei, dass die Bremse vorkomplettiert ausgebildet ist und somit als Komponente funktionsüberprüfbar ist. Außerdem ist sie zwar nicht dauerhaft betreibbar, da die Reibscheibe bei der maximalen Bremsleistung die entstehende Wärme nicht in ausreichendem Maße an die Umgebung abzuführen vermag, aber die Bremse ist als Einheit einfach bevorratbar und somit die Herstellung einfach ausführbar. Außerdem ist das Führungsteil zum Führen der Ankerscheibe als dasjenige Teil verwendbar, das die vorkomplettierte Bremse zusammenhält. Es ist also kein weiteres zusätzliches Teil notwendig. Wesentlich bei dem Führungsteil, das es an seinem einen axialen Ende einen Verbindungsbereich, beispielsweise Außengewinde, zum Verbinden mit dem Spulenkörper und an seinem anderen axialen Endbereich einen Verbindungsbereich, beispielsweise Innengewinde, zum Verbinden mit der Reibscheibe aufweist.

Durch die Vorkomplettierung ist also nicht nur eine einfache Montierbarkeit erreichbar sondern auch die Sicherheit erhöhbar.

Bei einer vorteilhaften Ausgestaltung ist die Ankerscheibe in Umfangsrichtung formschlüssig begrenzt und/oder gehalten vom Führungsteil. Von Vorteil ist dabei, dass das Führungsteil nicht nur die Beabstandung und den Zusammenhalt von Reibscheibe und Spulenkörper bewirkt sondern auch in dem so geschaffenen Zwischenraumbereich zwischen Reibscheibe und Spulenkern die Ankerscheibe vorsehbar ist, wobei sie zwar linear bewegbar angeordnet ist, aber in Umfangsrichtung nicht drehbar, weil formschlüssig, gehalten ist.

Bei einer vorteilhaften Ausgestaltung weist das Führungsteil einen ersten axialen Abschnitt auf zur axialen Führung der Ankerscheibe, insbesondere also ist in diesem ersten axialen Abschnitt ein zylindrischer Oberflächenabschnitt vorgesehen,
und weist einen zweiten axialen Abschnitt auf, der ein Außengewinde zum Einschrauben in eine Gewindebohrung des Spulenkerns aufweist. Von Vorteil ist dabei, dass die Verbindungsbereiche in einfacher Weise herstellbar sind.

Bei einer vorteilhaften Ausgestaltung ist an einem axialen Endbereich des Führungsteils ein Innensechskant vorgesehen, insbesondere so dass das Führungsteil mittels eines Sechskant-Werkzeugs in eine Gewindebohrung des Spulenkerns einschraubbar ist. Von Vorteil ist dabei, dass ein Einschrauben in den Spulenkern einfach ausführbar ist.

Bei einer vorteilhaften Ausgestaltung ist die Reibscheibe mittels einer Schraubverbindung, insbesondere mit einer Schraube, gegen eine Stufe des Führungsteils angestellt, wobei mittels der Schraubverbindung die Reibscheibe und das Führungsteil schraubverbunden sind. Von Vorteil ist dabei, dass axial vertieft unter dem Innensechskantbereich ein Innengewindebereich vorsehbar ist.

Bei einer vorteilhaften Ausgestaltung ist das Führungsteil in den Spulenkörper einschraubbar bis zu einem Anliegen eines weiteren an dem Führungsteil ausgebildeten Absatzes. Von Vorteil ist dabei, dass der Abstand in einfacher Weise vorgebbar ist.

Bei einer vorteilhaften Ausgestaltung weist das Führungsteil eine Ausnehmung mit Innengewinde auf, so dass die Reibscheibe der Bremse mittels einer Schraube an das Führungsteil schraubverbindbar ist, insbesondere gegen einen Absatz am Außenumfang des Führungsteils festlegbar ist. Von Vorteil ist dabei, dass einfache Verbindungsmittel verwendbar sind.

Bei einer vorteilhaften Ausgestaltung ist der Spulenkern der Bremse zur Aufnahme eines Lagers einer Rotorwelle ausgebildet, insbesondere wobei die vom Lager und von der Spulenwicklung der Bremse überdeckten axialen Bereiche sich überschneiden oder gleichen. Von Vorteil ist dabei, dass der Spulenkern nicht nur Magnetfelder durchleitet sondern sogar die vom Lager stammenden Kräfte, wie bei einer Drehmomentstütze, ableitet. Hierzu ist das Material entsprechend fest ausgelegt und trotzdem ferromagnetisch gewählt.

Bei einer vorteilhaften Ausgestaltung ist die Bremse in einem Gehäuseteil, insbesondere Lagerschild, aufnehmbar, insbesondere in einer im Wesentlichen topfförmigen Vertiefung dieses Gehäuseteils aufnehmbar und schraubverbindbar ist. Von Vorteil ist dabei, dass die Bremse schützbar ist in einfacher und robuster Weise.

Bei einer vorteilhaften Ausgestaltung ist die Bremse als elektromagnetisch betätigbare Federdruckbremse ausgeführt, insbesondere wobei am Spulenkörper des Elektromagneten Federelemente abgestützt sind, die bei Nichtbestromung des Elektromagneten eine Ankerscheibe auf einen Belagträger drücken, der somit auf eine Reibscheibe gedrückt wird, wobei die Ankerscheibe drehfest zur Reibscheibe und zum Elektromagneten angeordnet ist und axial verschiebbar angeordnet ist, wobei der Belagträger mit der Rotorwelle des Elektromotors drehfest und axial verschiebbar verbunden ist. Von Vorteil ist dabei, dass bei Stromausfall die Bremse einfällt und somit die Sicherheit erhöht ist.

Bei einer vorteilhaften Ausgestaltung ist die Bremse in einem axial verlängert ausgeführten Lagerschild aufnehmbar, an dem eine zweite Bremse angebaut ist, insbesondere wobei das Lagerschild als Bremsfläche für einen Belagträger der zweiten Bremse fungiert, wobei der Belagträger von einer mittels Federelementen axial verschiebbaren Ankerscheibe beaufschlagt wird. Von Vorteil ist dabei, dass zwei Bremsen vorsehbar sind und somit die Sicherheit erhöht ist.

Bei einer vorteilhaften Ausgestaltung sind erste und zweite Bremse vorkomplettiert ausgebildet, insbesondere also vor dem Zusammenbauen des gesamten Motors mit Bremsen funktionsüberprüfbar sind. Von Vorteil ist dabei, dass die Sicherheit erhöhbar ist und außerdem die Fertigung vereinfacht, da die Fertigungsschritte in Teilpaketen ausführbar sind, nämlich das Anfertigen der Bremse und separat davon das Zusammenfügen des Motors.

Bei einer vorteilhaften Ausgestaltung sind in Umfangsrichtung mehrere Führungsteile an geordnet, insbesondere mehrere gleichartige Führungsteile. Von Vorteil ist dabei, dass Die Stabilität und Sicherheit weiter erhöhbar ist.

Der beschriebene Elektromotor ist mit einer ersten und einer zweiten Bremse ausführbar,
wobei die erste Bremse im Gehäuse des Motors angeordnet ist,
wobei das Gehäuse die Statorwicklungen des Motors gehäusebildend umgibt und aus Gehäuseteilen zusammengesetzt ist, insbesondere mittels jeweiliger abgedichteter Schraubverbindungen zwischen den Gehäuseteilen,
wobei die zweite Bremse am Motor angebaut ist, insbesondere also am Gehäuse des Motors angebaut ist.

Von Vorteil ist dabei, dass zwei Bremsen Drehmoment, also Bremsmoment, an die Rotorwelle führen können. Somit ist die Sicherheit erhöhbar. Insbesondere sind die Bremsen nach verschiedenen Wirkprinzipien ausführbar, beispielsweise als den Piezoeffekt nutzende Bremse oder als elektromagnetisch betätigbare Federdruckbremse. Auf diese Weise ist durch die unterschiedlichen Wirkprinzipien eine noch weiter erhöhte Sicherheit erreichbar. Auch bei Ausführung als elektromagnetisch betätigbare Federdruckbremse sind unterschiedliche Wirkweisen realisierbar, wie Gleichstrombremse oder Wechselstrombremse.

Bei einer vorteilhaften Weiterbildung ist die erste Bremse in einem Gehäuseteil, insbesondere Lagerschild, aufgenommen, insbesondere in einer im Wesentlichen topfförmigen Vertiefung aufgenommen ist und schraubverbunden ist. Von Vorteil ist dabei, dass die erste Bremse vorkomplettiert ausbildbar ist und in einem für die Bremse gehäusebildenden und somit die Wärme der Bremse abführenden Gehäuseteil aufnehmbar ist. Außerdem hat das Gehäuseteil dann auch Magnetfeld-abschirmende Funktion.

Bei einer vorteilhaften Weiterbildung ist die erste Bremse in einem Gehäuseteil, insbesondere Lagerschild, aufgenommen, welches als Spulenkern der Spulenwicklung des Elektromagneten der Bremse fungiert. Von Vorteil ist dabei, dass das Gehäuseteil mehrere Funktionen ausführt und somit die Anzahl der notwendigen Teile für das Herstellen des Motors mit Bremsen gering ist.

Bei einer vorteilhaften Weiterbildung nimmt das Gehäuseteil ein Lager der Rotorwelle des Motors auf. Von Vorteil ist dabei, dass Kräfte vom Lager ans Gehäuseteil ableitbar sind und ebenso die Wärme des Lagers über das Gehäuseteil an die Umgebung ableitbar ist. Außerdem ist die Wärme der Bremsspule ableitbar an die Umgebung und das Magnetfeld geführt im Spulenkern. Insbesondere sitzen Lager und Spulenwicklung der Bremse im gleichen axialen Bereich oder die entsprechend überdeckten axialen Bereiche überschneiden sich.

Bei einer vorteilhaften Weiterbildung ist in einer im Wesentlichen topfförmigen Vertiefung aufgenommen und schraubverbunden. Von Vorteil ist dabei, dass das Gehäuseteil eine einfach herzustellende Formgebung aufweist.

Bei einer vorteilhaften Weiterbildung ist beziehungsweise sind eine der Bremsen oder beide Bremsen als elektromagnetisch betätigbare Federdruckbremse ausgeführt, insbesondere wobei am Spulenkörper des Elektromagneten Federelemente abgestützt sind, die bei Nichtbestromung des Elektromagneten eine Ankerscheibe auf einen Belagträger drücken, der somit auf eine Reibscheibe gedrückt wird, wobei die Ankerscheibe drehfest zur Reibscheibe und zum Elektromagneten angeordnet ist und axial verschiebbar angeordnet ist, wobei der Belagträger mit der Rotorwelle des Elektromotors drehfest und axial verschiebbar verbunden ist. Von Vorteil ist dabei, dass bei Nichtbestromung die Bremse einfällt und somit bei Stromausfall Bremskraft erzeugt wird, wodurch die Sicherheit erhöht ist.

Bei einer vorteilhaften Weiterbildung ist eine Bremse, insbesondere die erste Bremse, vorkomplettiert ausgebildet, insbesondere indem eine Reibscheibe mittels eines Führungsteils axial beabstandet zu einem Spulenkern der Bremse und festgelegt ist,
insbesondere wobei das Weiterbildung zur axialen Führung einer Ankerscheibe der Bremse vorgesehen ist, wobei die Ankerscheibe in Umfangsrichtung formschlüssig begrenzt und/oder gehalten ist vom Führungsteil. Von Vorteil ist dabei, dass die vorkomplettierte Bremse in ihrer Funktion schon vor dem Zusammenfügen des Motors überprüfbar ist als Einheit. Außerdem ist sie als lagerfähige Einheit ausgeführt und somit für logistische Zwecke einfach benutzbar.

Bei einer vorteilhaften Weiterbildung weist das Führungsteil einen ersten axialen Abschnitt aufweist zur Führung der Ankerscheibe und einen zweiten axialen Abschnitt auf, der ein Außengewinde zum Einschrauben in eine Gewindebohrung des Spulenkerns aufweist. Von Vorteil ist dabei, dass mittels des Führungsteils eine vorkomplettierte Ausführung ermöglicht ist und das Führungsteil zum Zusammenhalten der Teile der Bremse verwendbar ist.

Bei einer vorteilhaften Weiterbildung ist an einem axialen Endbereich des Führungsteils ein Innensechskant vorgesehen, insbesondere so dass das Führungsteil mittels eines Sechskant-Werkzeugs in eine Gewindebohrung des Spulenkerns einschraubbar ist. Von Vorteil ist dabei, dass eine einfache Herstellung ermöglicht ist.

Bei einer vorteilhaften Weiterbildung nimmt der Spulenkern der ersten Bremse ein Lager der Rotorwelle auf. Von Vorteil ist dabei, dass mehrere Funktionen realisiert sind mit einem einzigen Gehäuseteil.

Bei einer vorteilhaften Weiterbildung weist das Führungsteil eine Ausnehmung mit Innengewinde auf, so dass eine Reibscheibe der Bremse mittels einer Schraube an das Führungsteil schraubverbindbar ist, insbesondere gegen einen Absatz am Außenumfang des Führungsteils festlegbar ist. Von Vorteil ist dabei, dass ein Zusammenhalten der Reibscheibe und des Spulenkerns ermöglicht ist, wobei ein Abstand einhaltbar ist, so dass im Zwischenraum ein Belagträger und eine Ankerscheibe axial beweglich aber radial begrenzt gehalten sind.

Bei einer vorteilhaften Weiterbildung ist die erste Bremse in einem axial verlängert ausgeführten Lagerschild aufgenommen, an dem die zweite Bremse angebaut ist, insbesondere wobei das Lagerschild als Bremsfläche für einen Belagträger der zweiten Bremse fungiert, wobei der Belagträger von einer mittels Federelementen axial verschiebbaren Ankerscheibe beaufschlagt wird. Von Vorteil ist dabei, dass eine besonders einfache Herstellung ausführbar ist und das Lagerschild auch einen Anteil der Bremswärme der Anbaubremse an die Umgebung abführt.

Bei einer vorteilhaften Weiterbildung ist zwischen einem Raumbereich, der die erste Bremse umfasst, und einem Raumbereich, der den Stator umfasst, eine Dichtscheibe angeordnet, insbesondere weist die zur Rotorwelle hin eine Abdichtung, wie Labyrinth-Dichtung, auf. Von Vorteil ist dabei, dass kein Abrieb der Reibbeläge des Belagträgers in den motorraumberiech gelangen kann.

Bei einer vorteilhaften Weiterbildung ist ein Anschlusskasten am axial verlängert ausgeführten Lagerschild befestigt. Von Vorteil ist dabei, dass auch eine Haltefunktion hierfür ausführbar ist vom Lagerschild, wobei auch elektrische Leitungen durch eine Ausnehmung im Lagerschild zum Raumberiech des Stators des Motors führbar sind.

Bei einer vorteilhaften Weiterbildung sind erste und zweite Bremse vorkomplettiert ausgebildet, insbesondere sind die Bremsen also vor dem Zusammenbauen des gesamten Motors mit Bremsen funktionsüberprüfbar. Von Vorteil ist dabei, dass eine einfaches Handhaben und Herstellen ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erster erfindungsgemäßer Bremsmotor gezeigt, bei dem der Elektromotor als Asynchronmotor ausgeführt ist.
In der Figur 2 ist ein weiterer erfindungsgemäßer Bremsmotor im Querschnitt gezeigt, bei dem der Elektromotor als Synchronmotor ausgeführt ist.
In der Figur 3 ist eine vorkomplettierte Bremse in Explosionsdarstellung gezeigt. Ausführungsbeispiel

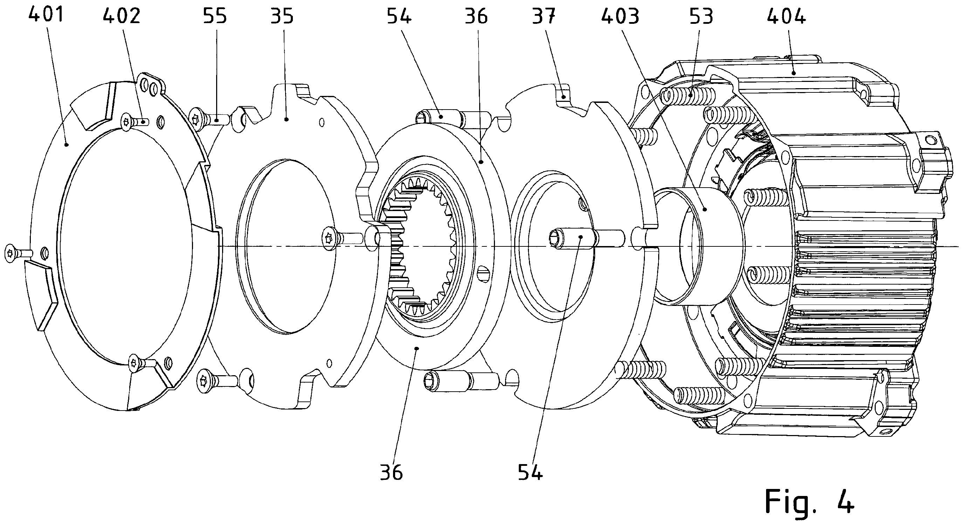

In der Figur 4 ist der Einbau der vorkomplettierten Bremse in ein Gehäuseteil 404 gezeigt, das gemäß Figur 6 an einen Elektromotor anbaubar ist.
In der Figur 5 ist die zu Figur 2 entsprechende Explosionsdarstellung eines Bremsmotors ausgeführt.
In der Figur 6 ist die zu Figur 1 entsprechende Explosionsdarstellung eines Bremsmotors ausgeführt.

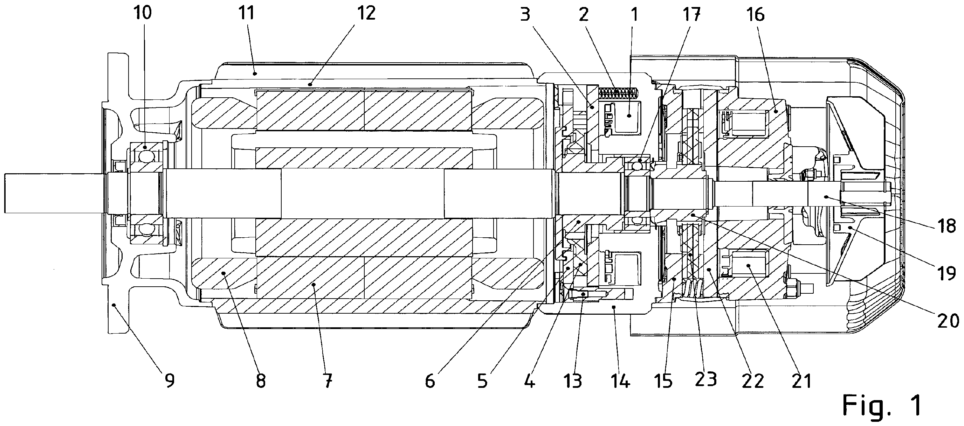

In der Figur 1 weist der Bremsmotor eine Rotorwelle 18 auf, die über ein Lager 10 im Lagerschild 9 gelagert ist. Dieses Lagerschild 9 ist schraubverbunden mit dem Gehäuseteil 12, welches Kühlrippen 11 aufweist. In diesem Gehäuseteil 12 ist das Statorblechpaket kraftschlüssig verbunden, insbesondere auch lösbar verbunden, eingeschrumpft und/oder mit Gussmasse vergossen.

Zugehörige Statorwicklungen sind in Ausnehmungen des Statorblechpakets vorgesehen, wobei in Figur 1 die Umlenkbereiche 8 der Statorwicklungen sichtbar sind.

Am vom Lagerschild 9 abgewandten axialen Endbereich des Gehäuseteils ist eine erste und axial nachfolgend eine zweite Bremse angeordnet, wobei die Bremsen elektromagnetisch betätigbar sind. Außerdem ist am axialen Endbereich des Motors ein Lüfter vorgesehen zur Kühlung der Bremsen und des Motors. Hierzu wird der Kühlluftstrom am Gehäuse des Bremsmotors in im Wesentlichen axialer Richtung entlang gelenkt.

Die erste dieser Bremsen weist ein als Spulenkern ausgebildetes Lagerschild 14 auf, das mit dem Gehäuseteil 12 schraubverbunden ist, wobei eine Dichtung in der Schraubverbindung zwischengeordnet ist. Das Material des Lagerschildes ist magnetisierbar, insbesondere ferromagnetisch. In einer im Wesentlichen ringförmigen Vertiefung des Lagerschilds 14 ist die Bremsspulenwicklung 1 angeordnet.

Eine axial vor der Bremsspulenwicklung, axial verschiebbare und geführte, aber verdrehgesichert angeordnete Ankerscheibe 3 wird bei Bestromung der Bremsspulenwicklung 1 von dieser angezogen und entgegen der von Federelementen 2 erzeugten Federkraft axial auf die Bremsspulenwicklung 1 hin bewegt. Dabei stützen sich die Federelemente 2 auch gegen das Lagerschild 14 ab.

Auf der Rotorwelle 18 ist ein Mitnehmer 6, also ein außenverzahntes Verzahnteil, mittels Passfederverbindung in Umfangsrichtung formschlüssig, also drehfest, verbunden Dabei ist die Außenverzahnung in Achsrichtung der Rotorwelle ausgeführt, so dass ein mit einer Innenverzahnung versehener Belagträger 4 in Umfangsrichtung formschlüssig aber in axialer Richtung verschiebbar angeordnet ist. Der Belagträger 4 weist axial an beiden Seiten Reibbeläge auf.

Auf der von der Ankerscheibe abgewandten axialen Seite des Belagträgers 4 ist eine Reibscheibe 5 angeordnet, die mit einem Gehäuseteil des Motors schraubverbindbar ist und somit Reibwärme ableitet an dieses Gehäuseteil.

Zur Schraubverbindung ist eine13 Schraube, die vorzugswiese als Stiftschraube ausgeführt ist, verwendet. Diese Schraube 13 dient zusätzlich auch der Führung der Ankerscheibe 3.

Die integrierte Ausführung des Lagerschildes 14 als Spulenkern ermöglicht auch die direkte Wärmeabfuhr der Bremsspule 1 an die Umgebung. Außerdem ist die beschriebene elektromagnetisch betätigbare Federdruckbremse in radialer Richtung gehäusebildend umgeben vom Lagerschild 14.

Axial vor der Bremse ist der Elektromotor angeordnet, wobei er dicht verbunden ist, also abgedichtet durch eine Dichtung. Axial hinter der Bremse ist eine zweite Bremse angeordnet zusammen mit einem Lüfter und gegebenenfalls mit einem Winkelsensor oder Winkelgeschwindigkeitssensor.

Die erste Bremse ist wegen ihres kompakten, ins Lagerschild 14 als Gehäuseteil integrierten Aufbaus als Einbaubremse bezeichenbar. Hingegen ist die zweite Bremse nach Art einer Anbaubremse ausgeführt.

Die Funktionsweise der Anbaubremse ist wiederum gleichartig zur geschilderten Funktionsweise der Einbaubremse.

Dabei ist die Anbaubremse mittels der Reibscheibe 15 angeschraubt an das Lagerschild 14. Der Spulenkern 16 nimmt wiederum die Bremsspulenwicklung 21 auf, bei deren Bestromung die Ankerscheibe 22 axial gegen die von Federelementen erzeugte Federkraft bewegt wird. Auf dem mit der Rotorwelle 18 drehfest verbundenen Mitnehmer 20 ist wiederum drehfest aber axial verschiebbar ein Belagträger 23 mit beidseitig angeordneten Reibbelägen vorgesehen. Somit wird bei Einfallen der Bremse, also bei Nichtbestromung der Bremsspulenwicklung 21, der Belagträger 23 von der Ankerscheibe 22 auf die Reibscheibe 15 gedrückt.

Am axialen Ende ist ein Lüfter 19 angeordnet. Zum Schutz ist eine mit dem Lagerschild 14 schraubverbundene Lüfterhaube den Lüfter 19 umgebend vorgesehen.

Das Lager 17 ist im Lagerschild 14 aufgenommen. Somit nimmt dieses auch die entsprechenden Kräfte auf. Da auch die Wärme vom Lagerschild 14 aufgenommene Wärme direkt an die Umgebung abführbar ist, außerdem das Lager 17 aufgenommen ist zur Lagerung der Rotorwelle 18 und das Material des Lagerschilds 14 derart ausgewählt und geformt ist, dass die von der Wicklung erzeugten Magnetfelder geführt werden, sind im Lagerschild 14 mehrere technische Funktionen integriert.

Die ans Lagerschild 14 auf der vom Motor abgewandten Seite angebaute Anbaubremse weist ein eigenständiges Gehäuse auf, insbesondere das zusammen mit der Lüfterhaube gebildet ist. Dieses Gehäuse ist mit dem Lagerschild an einer wohldefinierten Schnittstelle schraubverbunden. Dabei ist eine Dichtung vorgesehen und ein Zentriermittel, wie Zentrierbund. Statt der Anbaubremse sind auch andere Anbauten, wie beispielsweise umfassend einen Winkelsensor oder dergleichen, ausführbar.

Auch zum Motor hin weist das Lagerschild 14 eine entsprechende Schnittstelle auf, so dass verschiedene Motoren, insbesondere wahlweise Synchronmotor, Asynchronmotor, LSPM-Motor, Reluktanzmotor oder dergleichen, verbindbar sind an der Schnittstelle.

Bei weiteren erfindungsgemäßen Ausführungsbeispielen sind die Funktionsweise und/oder Wirkprinzipien der beiden Bremsen verschieden ausgeführt. Beispielsweise ist eine erste Bremse mit Gleichstrom und die andere Bremse mit Wechselstrom betrieben.

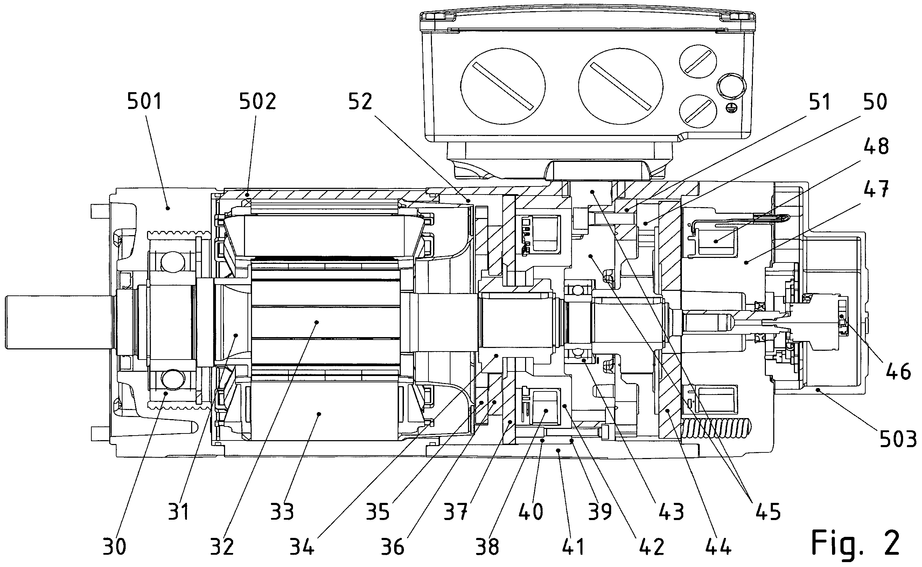

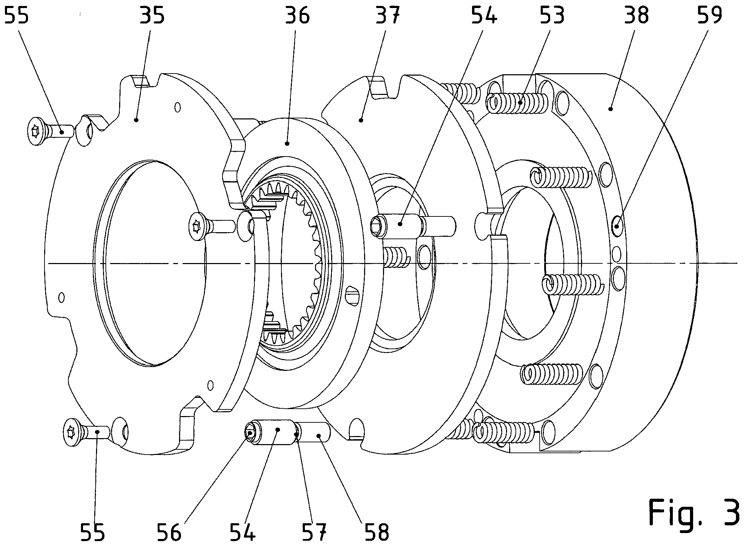

In der Figur 2 ist ein anderer Motor dargestellt, wobei hier die in Figur 3 dargestellte vorkomplettierte erste Bremse in ein Lagerschild 41 eingefügt wird, das die zweite Bremse aufnimmt.

Dabei ist die vorkomplettierte Bremse wiederum aus einem Spulenkörper 38 mit Spulenwicklung zusammengesetzt, an dem sich Druckfedern 53 abstützen und eine Ankerscheibe 37 axial vom Spulenkörper 38 wegdrücken, wenn die Spulenwicklung unbestromt ist. Dabei wird die Ankerscheibe 37 von sich axial erstreckenden Führungsteilen 54 geführt und auf den Belagträger 36 gedrückt, welcher beidseitig Reibbeläge aufweist und auf die Reibscheibe 35 gedrückt wird.

Die Vorkomplettierung bewirkt, dass die in Figur 3 gezeigte Bremse als solche transportierbar ist und eine lagerfähige Einheit bildet, also zusammengehalten ist.

Hierzu weisen die Führungsteile 54 einen ersten axialen Bereich auf, der zur Führung dient, also an der Außenseite zylindrisch und glatt ausgeführt ist. In einem zweiten axialen Bereich ist ein Außengewinde 58 vorgesehen, mit dem das jeweilige Führungsteil 54 in den Spulenkörper 38 eingeschraubt ist, insbesondere in eine jeweilige Gewindebohrung 59 des Spulenkörpers 38.

An der vom axialen Außengewinde-Bereich abgewandten axialen Endbereich des Führungsteils 54 ist ein Innensechskant 56 angeordnet, wodurch das Führungsteil 54 mit einem Sechskant-Werkzeug in eine entsprechend zugeordnete Gewindebohrung 59 des Spulenkörpers 38 einschraubbar ist. Axial tiefer als der Innensechskant 56, also axial sich anschließend an den Bereich des Innensechskants 56 ist eine Innengewindebohrung vorgesehen, in die Schrauben 55 einschraubbar. Dabei wird die Reibscheibe 35 von den Schrauben 55 gegen einen Absatz des Führungsteils gedrückt und somit der Abstand zwischen Reibscheibe 35 und Spulenkern 38 festgelegt.

Auf diese Weise ist die Bremse als Einheit zusammengehalten trotz der axialen Beweglichkeit der Ankerscheibe 37. Außerdem ist der Belagträger 36 gegen ein Herausfallen aus der Bremse gesichert, indem in Umfangsrichtung drei oder mehr Führungsteile 54 vorgesehen sind, die auf einem Durchmesser angeordnet sind, der größer ist als der Außendurchmesser des Belagträgers 36.

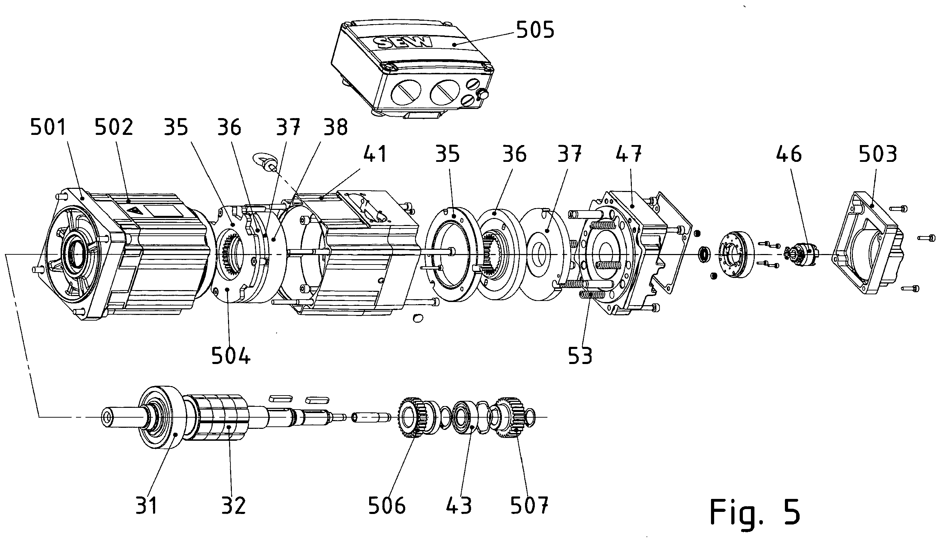

Wie in Figur 2 beziehungsweise in Figur 5 ersichtlich, ist der Anschlusskasten 505 auf das Lagerschild 41 aufschraubbar. Das verlängert ausgeführte Lagerschild 41 nimmt die vorkomplettierte Bremse (36, 37, 38, 504) auf und ist schraubverbunden mit dem Statorgehäuseteil 502 des Synchronmotors. A-seitig ist dieses Statorgehäuseteil abgeschlossen mittels eines Lagerschildes 501.

Die Rotorwelle 31 ist mit einem Mitnehmer 506 drehfest verbunden, der mit axial verlaufender Außenverzahnung für die Einbaubremse ausgeführt ist, und mit einem Mitnehmer 507, der mit axial verlaufender Außenverzahnung für die Anbaubremse ausgeführt ist.

Die vorkomplettierte Bremse nach Figur 3 wird schraubverbunden mit dem axial verlängert ausgeführten Lagerschild der zweiten Bremse, also in einer Vertiefung des grob gesprochen topfförmig ausgeführten Lagerschildes. Dabei wird die Schraubverbindung mit durchgehenden Verbindungsschrauben 40 ausgeführt.

Der Synchronmotor nach Figur 2 weist wiederum eine Rotorwelle 31 auf, die über ein erstes Lager 30 im Lagerschild 501 gelagert ist. Außerdem sind auf der Rotorwelle Dauermagnete 32 angeordnet, die mit dem auf dem Statorblechpaket 33 vorgesehenen Statorwicklungen wechselwirken.

Des Weiteren ist auf der Rotorwelle 31 wiederum ein Mitnehmer 34 angeordnet, so dass ein axial bewegbarer Reibbelagträger in Umfangsrichtung formschlüssig verbunden ist. Bei Nicht-Bestromung der Spulenwicklung 38 drückt die Ankerscheibe 37 den Belagträger gegen die Reibscheibe 35.

Somit entspricht diese Bremse nach Aufbau und Wirkungsweise der vorkomplettierten Bremse nach Figur 2 und ist nun in das Lagerschild (41, 45) als Einbaubremse eingebaut. Das Lagerschild (41, 45) nimmt aber auch das Lager 43 der Rotorwelle 31 auf.

Des Weiteren weist das Lagerschild (41, 45) einen Zentriersitz 39 auf, an dem die vorkomplettierte Einbaubremse verbindbar ist und somit ausgerichtet wird beim Verbinden.

An das Lagerschild (41, 45) ist eine Anbaubremse angebaut, die kein Lager der Rotorwelle 31 aufnimmt sondern auf der von der Einbaubremse abgewandten Seite 42 des Lagers 43 angeordnet ist.

Die Anbaubremse ist in gleichartiger Weise aufgebaut wie die Einbaubremse, so dass also ein Spulenkern 47 schraubverbunden ist mit dem Lagerschild (41, 45). Im Spulenkern 47 ist eine Spulenwicklung aufgenommen, deren Magnetfeld bei Bestromung der Spulenwicklung 48 die Ankerscheibe anzieht. Bei Nichtbestromung drücken Federelemente die Ankerscheibe wiederum auf einen Belagträger 50, welcher axial beweglich und in Umfangsrichtung formschlüssig mit einem Mitnehmer verbunden ist, der drehfest mit der Rotorwelle verbunden ist. Dabei drückt dann die Ankerscheibe 44 den Belagträger 50 gegen die Reibscheibe 51. Die Ankerscheibe 44 ist wiederum axial geführt die Reibscheibe 51 lösbar verbunden mit dem Spulenkern 47.

Am motorabgewandten Endbereich der Anbaubremse ist ein Winkelsensor 46 angeordnet.

Zwischen Motorbereich und Einbaubremse ist eine Dichtscheibe 52, insbesondere aus Kunststoff, angeordnet. Somit ist verhindert, dass Abrieb des Belagträgers in den Motorbereich gelangen.

Die Dichtscheibe 52 ist auch zur Rotorwelle 31 hin abgedichtet ausgeführt, insbesondere mit einer Labyrinthdichtung oder dergleichen. Somit ist der Motorbereich vom Bereich der Einbaubremse genügend abgedichtet, insbesondere um das Eindringen von Abrieb in den Motorbereich zumindest im Wesentlichen zu verhindern.

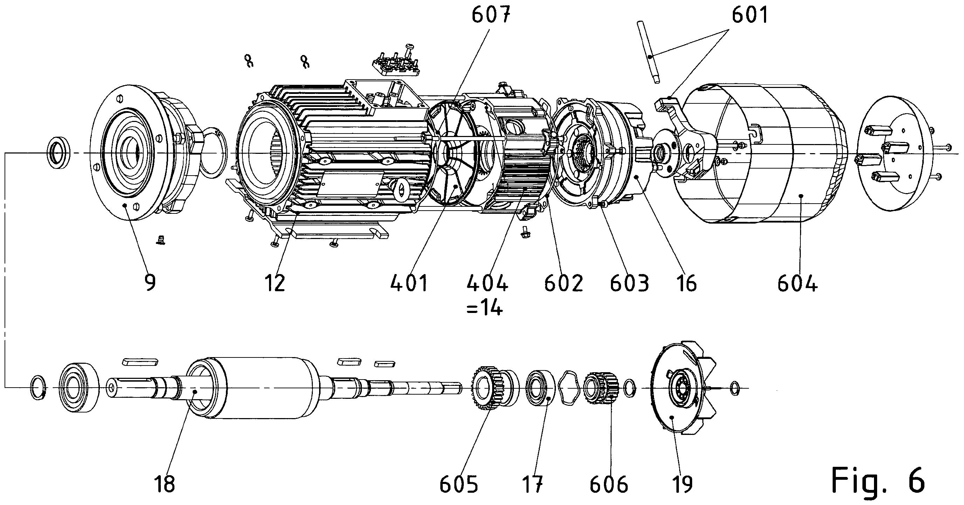

Bei dem erfindungsgemäßen Ausführungsbeispiel nach Figur 6 ist die an den Asynchronmotor angebaute Bremse gezeigt, die als Einbaubremse ausgeführt ist, also den Motor an seiner axialen Stirnseite gehäusebildend abschließt, und mit der Reibscheibe 401 zum Motor hin abgedichtet mit dem Dichtring 607 verbunden wird. Eine zweite Bremse ist als Anbaubremse ausgeführt und abgedichtet mit dem Lagerschild, also Gehäuseteil der Einbaubremse, verbunden mittels des Dichtrings 602. Die Anbaubremse ist mittels der Schrauben 603 an das Lageschild (404, 14) angeschraubt. Am Gehäuseteil 16 der Anbaubremse ist eine Lüfterhaube gehäusebildend vorgesehen, aus der nur der von Hand betätigbare Betätigungshebel der Handlüfteinheit 601 herausragt. Mittels Betätigens dieser Handlüfteinheit 601 ist die Bremse lüftbar, also im stromlosen Fall die Bremskraft abstellbar.

Auf der Rotorwelle 18 ist ein Mitnehmer 605 mit axial verlaufender Außenverzahnung für die Einbaubremse und axial hiervon beabstandet durch das Lager 17 ein Mitnehmer 606 mit axial verlaufender Außenverzahnung für die Anbaubremse vorgesehen.

### Bezugszeichenliste

1 Bremsspulenwicklung
2 Federelemente
3 Ankerscheibe
4 Belagträger
5 Reibscheibe
6 Mitnehmer
7 Statorblechpaket
8 Umlenkbereich der Statorwicklungen
9 Lagerschild
10 Lager
11 Kühlrippen
12 Gehäuseteil
13 Schraube
14, 404 als Spulenkern ausgebildetes Lagerschild
15 Reibscheibe
16 Spulenkern
17 Lager
18 Rotorwelle
19 Lüfter
20 Mitnehmer
21 Bremsspulenwicklung
22 Ankerscheibe
23 Belagträger
30 Lager
31 Rotorwelle
32 Dauermagnete
33 Statorblechpaket
34 Mitnehmer
35 Reibscheibe
36 Belagträger
37 Ankerscheibe
38 Spulenkörper mit Spulenwicklung
39 Zentriersitz
40 Verbindungsschraube
41 Lagerschild, axial verlängert ausgeführt
42 Spulenkern
43 Lager
44 Ankerscheibe
45 Lagerschild
46 Winkelsensor
47 Spulenkern
48 Spulenwicklung
50 Belagträger
51 Reibscheibe
52 Dichtscheibe, insbesondere Kunststoff-Dichtscheibe
53 Druckfedern
54 Führungsteil
55 Schraube zum Anschrauben der Reibscheibe gegen die Stufe des Führungsteils 54
56 Innensechskant
57 Absatz
58 Außengewinde
59 Gewindebohrung
401 Dichtscheibe
402 Schraube
403 Hülse
404 Lagerschild
501 Lagerschild
502 Gehäuseteil des Synchronmotors
503 Gehäuseteil
504 Reibscheibe
505 Anschlusskasten
506 Mitnehmer mit axial verlaufender Außenverzahnung für Einbaubremse
507 Mitnehmer mit axial verlaufender Außenverzahnung für Anbaubremse
601 Handlüfteinheit
602 Dichtring
603 Schraube
604 Lüfterhaube
605 Mitnehmer mit axial verlaufender Außenverzahnung für Einbaubremse
606 Mitnehmer mit axial verlaufender Außenverzahnung für Anbaubremse
607 Dichtring

## Patentansprüche

1. Bausatz zur Herstellung unterschiedlicher Elektromotoren einer Baureihe von Elektromotoren,
wobei der Bausatz zumindest
- eine erste Bremse,
- ein erstes und ein zweites Lagerschild (9, 41, 45, 404, 501),
- ein erstes und ein zweites Gehäuseteil (12, 502, 503),
- erste und zweite Anbaueinheit,
aufweist,
wobei das erste Gehäuseteil (12, 502, 503) mit dem ersten Lagerschild (9, 41, 45, 404, 501) verbunden ist, insbesondere schraubverbindbar ist, so dass ein Gehäuse gebildet ist für einen ersten Motor,
wobei das zweite Gehäuseteil (12, 502, 503) mit dem zweiten Lagerschild (9, 41, 45, 404, 501) verbunden ist, insbesondere schraubverbindbar ist, so dass ein Gehäuse gebildet ist für einen zweiten Motor,
wobei die erste Bremse wahlweise im ersten oder zweiten Lagerschild (9, 41, 45, 404, 501) aufgenommen ist, so dass das jeweilige Lagerschild (9, 41, 45, 404, 501) die erste Bremse gehäusebildend umgibt und die Rotorwelle (18, 31) des Motors in einem vom Lagerschild (9, 41, 45, 404, 501) aufgenommenen Lager lagerbar ist,
wobei das Gehäuse die Statorwicklungen des jeweiligen Motors gehäusebildend umgibt und aus Gehäuseteilen zusammengesetzt ist, insbesondere mittels jeweiliger abgedichteter Schraubverbindungen zwischen dem jeweiligen Lagerschild (9, 41, 45, 404, 501) und dem jeweiligen Gehäuseteil (12, 502, 503),
**dadurch gekennzeichnet, dass** die erste oder zweite Anbaueinheit zumindest eine zweite Bremse umfasst, wobei die zweite Bremse am Gehäuse des Motors anbaubar ist,
wobei die zweite Bremse am ersten oder zweiten Lagerschild (9, 41, 45, 404, 501) angebaut ist,
wobei erste und zweite Bremse vorkomplettiert ausgebildet sind, insbesondere also die Bremsen vor dem Zusammenbauen des gesamten Motors mit Bremsen funktionsüberprüfbar sind.

2. Bausatz nach Anspruch 1,
**dadurch gekennzeichnet, dass**
die erste Bremse im Gehäuse des ersten oder zweiten Motors anordenbar ist.

3. Bausatz nach einem der vorhergehenden Ansprüche,
**dadurch gekennzeichnet, dass**
der erste Motor vom zweiten Motor sich unterscheidet,
insbesondere indem der erste Motor ein Asynchronmotor und der zweite Motor ein Synchronmotor ist.

4. Bausatz nach einem der vorhergehenden Ansprüche,
**dadurch gekennzeichnet, dass**
die erste Bremse in einer im Wesentlichen topfförmigen Vertiefung des jeweiligen Lagerschildes (9, 41, 45, 404, 501) aufnehmbar ist und schraubverbindbar ist
insbesondere wobei das jeweilige Lagerschild (9, 41, 45, 404, 501) als Bremsfläche für einen Belagträger (4, 23, 36, 50) der zweiten Bremse fungiert, wobei der Belagträger (4, 23, 36, 50) von einer mittels Federelementen axial verschiebbaren Ankerscheibe (3, 22, 37, 44) beaufschlagt wird.

5. Bausatz nach einem der vorhergehenden Ansprüche,
**dadurch gekennzeichnet, dass**
das erste oder zweite Lagerschild (9, 41, 45, 404, 501) als Spulenkern (16, 42, 47) der Spulenwicklung des Elektromagneten der ersten Bremse fungiert, wobei die erste Bremse als elektromagnetisch betätigbare Federdruckbremse ausgeführt ist.

6. Bausatz nach einem der vorhergehenden Ansprüche,
**dadurch gekennzeichnet, dass**
das erste und zweite Gehäuseteil (12, 502, 503) ein Lager der Rotorwelle (18, 31) des Motors aufnimmt, insbesondere wobei das erste und zweite Gehäuseteil (12, 502, 503) zweistückig ausgeführt sind und hierzu zumindest ein weiteres Lagerschild (9, 41, 45, 404, 501) umfassen, welches das Lager der Rotorwelle (18, 31) des Motors aufnimmt.

7. Bausatz nach Anspruch 5, **dadurch gekennzeichnet, dass**
eine der Bremsen oder beide Bremsen als elektromagnetisch betätigbare Federdruckbremse ausgeführt ist beziehungsweise sind, insbesondere wobei am Spulenkörper des Elektromagneten Federelemente (2) abgestützt sind, die bei Nichtbestromung des Elektromagneten eine Ankerscheibe (3, 22, 37, 44) auf einen Belagträger (4, 23, 36, 50) drücken, der somit auf eine Reibscheibe (5, 15, 35, 51, 504) gedrückt wird, wobei die Ankerscheibe (3, 22, 37, 44) drehfest zur Reibscheibe (5, 15, 35, 51, 504) und zum Elektromagneten angeordnet ist und axial verschiebbar angeordnet ist, wobei der Belagträger (4, 23, 36, 50) mit der Rotorwelle (18, 31) des Elektromotors drehfest und axial verschiebbar verbunden ist.

8. Bausatz nach Anspruch 7, wobei die Reibscheibe (5, 15, 35, 51, 504) mittels eines Führungsteils axial beabstandet zu einem Spulenkern (16, 42, 47) der Bremse und festgelegt ist,
insbesondere wobei das Führungsteil zur axialen Führung einer Ankerscheibe (3, 22, 37, 44) der Bremse vorgesehen ist, wobei die Ankerscheibe (3, 22, 37, 44) in Umfangsrichtung formschlüssig begrenzt und/oder gehalten ist vom Führungsteil.

9. Bausatz nach Anspruch 8, **dadurch gekennzeichnet, dass**
das Führungsteil einen ersten axialen Abschnitt aufweist zur Führung der Ankerscheibe (3, 22, 37, 44) und einen zweiten axialen Abschnitt aufweist, der ein Außengewinde zum Einschrauben in eine Gewindebohrung des Spulenkerns (16, 42, 47) aufweist.

10. Bausatz nach Anspruch 8, **dadurch gekennzeichnet, dass**
an einem axialen Endbereich des Führungsteils ein Innensechskant vorgesehen ist, insbesondere so dass das Führungsteil mittels eines Sechskant-Werkzeugs in eine Gewindebohrung des Spulenkerns (16, 42, 47) einschraubbar ist.

11. Bausatz nach Anspruch 8, **dadurch gekennzeichnet, dass**
das Führungsteil eine Ausnehmung mit Innengewinde aufweist, so dass eine Reibscheibe (5, 15, 35, 51, 504) der Bremse mittels einer Schraube an das Führungsteil schraubverbindbar ist, insbesondere gegen einen Absatz am Außenumfang des Führungsteils festlegbar ist, und/oder dass
zwischen einem Raumbereich, der die erste Bremse umfasst, und einem Raumbereich, der den Stator umfasst, eine Dichtscheibe angeordnet ist, insbesondere weist die zur Rotorwelle (18, 31) hin eine Abdichtung, wie Labyrinth-Dichtung, auf.

12. Verfahren zum Herstellen unterschiedlicher Elektromotoren aus einem Bausatz nach einem der vorhergehenden Ansprüche, wobei der Bausatz zumindest
- eine erste Bremse,
- ein erstes und ein zweites Lagerschild,
- ein erstes und ein zweites Gehäuseteil (12, 502, 503),
- erste und zweite Anbaueinheit,
aufweist,
**dadurch gekennzeichnet, dass**
wahlweise
zur Bildung eines ersten Elektromotors das erste Gehäuseteil mit dem ersten Lagerschild verbunden wird, insbesondere schraubverbunden wird, so dass ein Gehäuse gebildet ist für den ersten Motor, wobei die erste Bremse im ersten Lagerschild aufgenommen wird, so dass das erste Lagerschild die erste Bremse gehäusebildend umgibt und die Rotorwelle (18, 31) des Motors in einem vom ersten Lagerschild aufgenommenen Lager lagerbar ist,
zur Bildung eines zweiten Elektromotors das zweite Gehäuseteil mit dem zweiten Lagerschild verbunden wird, insbesondere schraubverbunden wird, so dass ein Gehäuse gebildet ist für den zweiten Motor, wobei die erste Bremse im zweiten Lagerschild aufgenommen wird, so dass das zweite Lagerschild die erste Bremse gehäusebildend umgibt und die Rotorwelle (18, 31) des Motors in einem vom zweiten Lagerschild aufgenommenen Lager lagerbar ist,
wobei das jeweils gebildete Gehäuse die Statorwicklungen des jeweiligen Motors gehäusebildend umgibt und aus Gehäuseteilen zusammengesetzt wird, insbesondere mittels jeweiliger abgedichteter Schraubverbindungen zwischen dem jeweiligen Lagerschild und dem jeweiligen Gehäuseteil,
insbesondere wobei am ersten Lageschild eine erste Anbaueinheit verbunden wird, insbesondere schraubverbunden wird, und am zweiten Lageschild eine zweite Anbaueinheit verbunden wird, insbesondere schraubverbunden wird, wobei die erste oder zweite Anbaueinheit zumindest eine zweite Bremse umfasst, wobei die zweite Bremse am ersten beziehungsweise zweiten Lagerschild angebaut wird, insbesondere wobei erste und zweite Anbaueinheit unterschiedlich sind.

## Claims

1. Kit for the production of different electric motors of a series of electric motors,
wherein the kit has at least
- a first brake,
- a first and a second end shield (9, 41, 45, 404, 501),
- a first and a second housing part (12, 502, 503),
- first and second add-on unit,
wherein the first housing part (12, 502, 503) is connected, in particular is screw-connectable, to the first end shield (9, 41, 45, 404, 501), so that a housing is formed for a first motor,
wherein the second housing part (12, 502, 503) is connected, in particular is screw-connectable, to the second end shield (9, 41, 45, 404, 501), so that a housing is formed for a second motor,
wherein the first brake is received selectively in the first or second end shield (9, 41, 45, 404, 501), so that the respective end shield (9, 41, 45, 404, 501) surrounds the first brake in a housing-forming manner and the rotor shaft (18, 31) of the motor is mountable in a bearing received by the end shield (9, 41, 45, 404, 501),
wherein the housing surrounds the stator windings of the respective motor in a housing-forming manner and is composed of housing parts, in particular by means of respective sealed screw connections between the respective end shield (9, 41, 45, 404, 501) and the respective housing part (12, 502, 503), **characterised in that**
the first or second add-on unit comprises at least a second brake, wherein the second brake is mountable on the housing of the motor,
wherein the second brake is mounted on the first or second end shield (9, 41, 45, 404, 501),
wherein first and second brake are of preassembled form, in particular therefore the brakes can be functionally tested before assembling the entire motor with brakes.

2. Kit according to claim 1,
**characterised in that**
the first brake is arrangeable in the housing of the first or second motor.

3. Kit according to one of the preceding claims,
**characterised in that**
the first motor is different from the second motor,
in particular by the first motor being an asynchronous motor and the second motor being a synchronous motor.

4. Kit according to one of the preceding claims,
**characterised in that**
the first brake is receivable and is screw-connectable in a substantially cup-shaped indentation of the respective end shield (9, 41, 45, 404, 501)
in particular wherein the respective end shield (9, 41, 45, 404, 501) acts as a braking surface for a lining carrier (4, 23, 36, 50) of the second brake, wherein the lining carrier (4, 23, 36, 50) is acted upon by an armature plate (3, 22, 37, 44) axially displaceable by means of spring elements.

5. Kit according to one of the preceding claims,
**characterised in that**
the first or second end shield (9, 41, 45, 404, 501) acts as a coil core (16, 42, 47) of the coil winding of the electromagnet of the first brake, wherein the first brake is designed as an electromagnetically actuatable spring-loaded brake.

6. Kit according to one of the preceding claims,
**characterised in that**
the first and second housing part (12, 502, 503) receives a bearing of the rotor shaft (18, 31) of the motor, in particular wherein the first and second housing part (12, 502, 503) are of two-piece design and for this purpose comprise at least one further end shield (9, 41, 45, 404, 501) which receives the bearing of the rotor shaft (18, 31) of the motor.

7. Kit according to claim 5,
**characterised in that**
one of the brakes or both brakes is or are designed as an electromagnetically actuatable spring-loaded brake, in particular wherein spring elements (2) are supported on the coil former of the electromagnet and, when the electromagnet is not supplied with current, press an armature plate (3, 22, 37, 44) against a lining carrier (4, 23, 36, 50), which is thus pressed against a friction disc (5, 15, 35, 51, 504), wherein the armature plate (3, 22, 37, 44) is arranged rotationally fixed to the friction disc (5, 15, 35, 51, 504) and to the electromagnet and is arranged axially displaceable, wherein the lining carrier (4, 23, 36, 50) is connected to the rotor shaft (18, 31) of the electric motor in a rotationally fixed and axially displaceable manner.

8. Kit according to claim 7,
wherein the friction disc (5, 15, 35, 51, 504) is axially spaced from a coil core (16, 42, 47) of the brake by means of a guide part and fixed,
in particular wherein the guide part is provided for axial guidance of an armature plate (3, 22, 37, 44) of the brake, wherein the armature plate (3, 22, 37, 44) is form-fittingly limited and/or held by the guide part in the circumferential direction.

9. Kit according to claim 8,
**characterised in that**
the guide part has a first axial portion for guiding the armature plate (3, 22, 37, 44) and has a second axial portion having an external thread for screwing into a threaded bore of the coil core (16, 42, 47).

10. Kit according to claim 8,
**characterised in that**
a hexagon socket is provided at one axial end region of the guide part, in particular so that the guide part can be screwed into a threaded bore of the coil core (16, 42, 47) by means of a hexagon tool.

11. Kit according to claim 8,
**characterised in that**
the guide part has a recess with internal thread, so that a friction disc (5, 15, 35, 51, 504) of the brake is screw-connectable to the guide part by means of a screw, in particular is fixable against a shoulder on the outer circumference of the guide part,
and/or **in that**
a sealing disc is arranged between a spatial region which comprises the first brake, and a spatial region which comprises the stator, in particular it has a seal towards the rotor shaft (18, 31), such as a labyrinth seal.

12. Method for producing different electric motors from a kit according to one of the preceding claims,
wherein the kit has at least
- a first brake,
- a first and a second end shield,
- a first and a second housing part (12, 502, 503),
- first and second add-on unit,
**characterised in that**
selectively
to form a first electric motor, the first housing part is connected, in particular is screw-connected, to the first end shield, so that a housing is formed for the first motor, wherein the first brake is received in the first end shield, so that the first end shield surrounds the first brake in a housing-forming manner and the rotor shaft (18, 31) of the motor is mountable in a bearing received by the first end shield,
to form a second electric motor, the second housing part is connected, in particular is screw-connected, to the second end shield, so that a housing is formed for the second motor, wherein the first brake is received in the second end shield, so that the second end shield surrounds the first brake in a housing-forming manner and the rotor shaft (18, 31) of the motor is mountable in a bearing received by the second end shield,
wherein the respectively formed housing surrounds the stator windings of the respective motor in a housing-forming manner and is composed of housing parts, in particular by means of respective sealed screw connections between the respective end shield and the respective housing part,
in particular wherein a first add-on unit is connected, in particular is screw-connected, to the first end shield,
and a second add-on unit is connected, in particular is screw-connected, to the second end shield,
wherein the first or second add-on unit comprises at least a second brake, wherein the second brake is mounted on the first or second end shield, in particular wherein first and second add-on unit are different.

## Revendications

1. Ensemble de pièces dévolu à la fabrication de différents moteurs électriques d'une gamme de production de moteurs électriques,
ledit ensemble de pièces comprenant au moins
- un premier frein,
- des premier et second flasques de paliers (9, 41, 45, 404, 501),
- des première et seconde parties de carter (12, 502, 503),
- des première et seconde unités de montage rapporté,
ladite première partie de carter (12, 502, 503) étant reliée, et pouvant notamment être reliée par vissage audit premier flasque de palier (9, 41, 45, 404, 501), formant ainsi un carter dédié à un premier moteur,
ladite seconde partie de carter (12, 502, 503) étant reliée, et pouvant notamment être reliée par vissage audit second flasque de palier (9, 41, 45, 404, 501), formant ainsi un carter dédié à un second moteur,
le premier frein étant sélectivement logé dans ledit premier ou dans ledit second flasque de palier (9, 41, 45, 404, 501), de telle sorte que le flasque de palier (9, 41, 45, 404, 501) considéré entoure ledit premier frein, avec formation d'une enceinte, et que l'arbre rotorique (18, 31) du moteur puisse être monté dans un palier intégré dans ledit flasque de palier (9, 41, 45, 404, 501),
ledit carter entourant les enroulements statoriques du moteur considéré, avec formation d'une enceinte, et étant composé de parties, notamment au moyen de liaisons vissées respectives dont l'étanchéité est assurée entre le flasque de palier (9, 41, 45, 404, 501) considéré et la partie de carter (12, 502, 503) considérée,
**caractérisé par le fait que**
la première, ou la seconde unité de montage rapporté inclut au moins un second frein, lequel second frein peut être rapporté sur le carter du moteur,
ledit second frein étant rapporté sur le premier, ou sur le second flasque de palier (9, 41, 45, 404, 501),
les premier et second freins étant de réalisation pré-achevée, permettant ainsi, en particulier, un contrôle fonctionnel desdits freins avant que ledit moteur ne soit intégralement assemblé avec des freins.

2. Ensemble de pièces conforme à la revendication 1,
**caractérisé par le fait que**
le premier frein peut être logé dans le carter du premier, ou du second moteur.

3. Ensemble de pièces conforme à l'une des revendications précédentes,
**caractérisé par le fait que**
le premier moteur se différencie du second moteur,
notamment en ce sens que ledit premier moteur est un moteur asynchrone, et que ledit second moteur est un moteur synchrone.

4. Ensemble de pièces conforme à l'une des revendications précédentes,
**caractérisé par le fait que**
le premier frein peut être reçu par une creusure du flasque de palier (9, 41, 45, 404, 501) considéré, revêtant substantiellement la forme d'un pot, et peut être relié par vissage, sachant notamment que ledit flasque de palier (9, 41, 45, 404, 501) considéré remplit la fonction d'une surface de freinage affectée à un porte-garniture (4, 23, 36, 50) du second frein, ledit porte-garniture (4, 23, 36, 50) étant sollicité par un disque d'induit (3, 22, 37, 44) pouvant coulisser axialement au moyen d'éléments élastiques.

5. Ensemble de pièces conforme à l'une des revendications précédentes,
**caractérisé par le fait que**
le premier, ou le second flasque de palier (9, 41, 45, 404, 501) remplit la fonction d'un noyau de bobine (16, 42, 47) de l'enroulement de l'électro-aimant du premier frein, lequel premier frein est réalisé sous la forme d'un frein à pression de ressorts pouvant être actionné électromagnétiquement.

6. Ensemble de pièces conforme à l'une des revendications précédentes,
**caractérisé par le fait que**
les première et seconde parties de carter (12, 502, 503) reçoivent un palier de l'arbre rotorique (18, 31) du moteur, sachant notamment que lesdites première et seconde parties de carter (12, 502, 503) sont réalisées en deux éléments et incluent, à cet effet, un flasque de palier (9, 41, 45, 404, 501) supplémentaire, recevant ledit palier de l'arbre rotorique (18, 31) du moteur.

7. Ensemble de pièces conforme à la revendication 5,
**caractérisé par le fait que**
l'un des freins, ou les deux freins, est (sont) réalisé(s) sous la forme d'un frein à pression de ressorts pouvant être actionné électromagnétiquement, sachant notamment que, lorsque l'électro-aimant est privé de courant, des éléments élastiques (2), prenant appui sur le corps de la bobine dudit électro-aimant, pressent un disque d'induit (3, 22, 37, 44) contre un porte-garniture (4, 23, 36, 50) qui, de ce fait, est pressé contre un disque de friction (5, 15, 35, 51, 504), ledit disque d'induit (3, 22, 37, 44) étant agencé avec verrouillage rotatif par rapport audit disque de friction (5, 15, 35, 51, 504) et audit électro-aimant, et étant apte au coulissement axial, ledit porte-garniture (4, 23, 36, 50) étant relié à l'arbre rotoriquc (18, 31) du moteur électrique avec verrouillage rotatif et faculté de coulissement axial.

8. Ensemble de pièces conforme à la revendication 7,
dans lequel
le disque de friction (5, 15, 35, 51, 504) est consigné à demeure avec espacement axial par rapport à un noyau de bobine (16, 42, 47) du frein, au moyen d'une pièce de guidage, laquelle pièce de guidage est notamment prévue pour le guidage axial d'un disque d'induit (3, 22, 37, 44) dudit frein, ledit disque d'induit (3, 22, 37, 44) étant limité et/ou retenu par ladite pièce de guidage dans le sens périphérique, par complémentarité de formes.

9. Ensemble de pièces conforme à la revendication 8,
**caractérisé par le fait que**
la pièce de guidage présente un premier tronçon axial dévolu au guidage du disque d'induit (3, 22, 37, 44), et comporte un second tronçon axial muni d'un filetage extérieur, en vue du vissage dans un perçage taraudé du noyau de bobine (16, 42, 47).

10. Ensemble de pièces conforme à la revendication 8,
**caractérisé par le fait**
**qu'**une configuration à six pans creux est prévue dans une région extrême axiale de la pièce de guidage, notamment de façon telle que ladite pièce de guidage puisse être vissée, au moyen d'un outil hexagonal, dans un perçage taraudé du noyau de bobine (16, 42, 47).

11. Ensemble de pièces conforme à la revendication 8,
**caractérisé par le fait que**
la pièce de guidage est pourvue d'un évidement à filetage intérieur, de sorte qu'un disque de friction (5, 15, 35, 51, 504) du frein peut être relié par vissage à ladite pièce de guidage, au moyen d'une vis, et peut notamment être bloqué à demeure contre un décrochement ménagé sur le pourtour extérieur de ladite pièce de guidage ;
et/ou **par le fait**
**qu'**un disque d'étanchement est interposé entre une zone spatiale incluant le premier frein et une zone spatiale incluant le stator, et est notamment doté, en direction de l'arbre rotorique (18, 31), d'une garniture d'étanchement telle qu'un joint d'étanchement à labyrinthe.

12. Procédé destiné à la fabrication de différents moteurs électriques à partir d'un ensemble de pièces conforme à l'une des revendications précédentes,
ledit ensemble de pièces comprenant au moins
- un premier frein,
- des premier et second flasques de paliers,
- des première et seconde parties de carter (12, 502, 503),
- des première et seconde unités de montage rapporté,
**caractérisé par le fait que**,
de manière sélective,
en vue de former un premier moteur électrique, la première partie de carter est reliée, notamment reliée par vissage au premier flasque de palier, formant ainsi un carter dédié audit premier moteur, le premier frein étant logé dans ledit premier flasque de palier, de telle sorte que ledit premier flasque de palier entoure ledit premier frein, avec formation d'une enceinte, et que l'arbre rotorique (18, 31) dudit moteur puisse être monté dans un palier intégré dans ledit premier flasque de palier,
en vue de former un second moteur électrique, la seconde partie de carter est reliée, notamment reliée par vissage au second flasque de palier, formant ainsi un carter dédié audit second moteur, le premier frein étant logé dans ledit second flasque de palier, de telle sorte que ledit second flasque de palier entoure ledit premier frein, avec formation d'une enceinte, et que l'arbre rotorique (18, 31) dudit moteur puisse être monté dans un palier intégré dans ledit second flasque de palier,
sachant que le carter, respectivement formé, entoure les enroulements statoriques du moteur considéré, avec formation d'une enceinte, et est composé de parties, notamment au moyen de liaisons vissées respectives dont l'étanchéité est assurée entre le flasque de palier considéré et la partie de carter considérée,
sachant notamment qu'une première unité de montage rapporté est reliée, notamment reliée par vissage audit premier flasque de palier,
et qu'une seconde unité de montage rapporté est reliée, notamment reliée par vissage audit second flasque de palier,
la première, ou la seconde unité de montage rapporté incluant au moins un second frein, lequel second frein est respectivement rapporté sur le premier, ou sur le second flasque de palier, sachant notamment que lesdites première et seconde unités de montage rapporté sont différentes.
